# EUROPEAN PATENT SPECIFICATION

(11) **EP 4 390 785 B1**
(45) Date of publication and mention of the grant of the patent: **16.09.2026**
(21) Application number: 22215294.4
(22) Date of filing: 21.12.2022
(51) Int. Cl.: G06Q 10/00, G06Q 10/08, G06Q 10/0833, G06Q 10/087, G06Q 10/0875

(54) **METHOD FOR CHECKING THE STATUS OF A COMPONENT OF A CONVEYOR, COMPUTER PROGRAM AND SYSTEM**
VERFAHREN ZUR ZUSTANDSÜBERPRÜFUNG EINER KOMPONENTE EINES FÖRDERERS, COMPUTERPROGRAMM UND SYSTEM
PROCÉDÉ DE VÉRIFICATION DE L'ÉTAT D'UN COMPOSANT D'UN TRANSPORTEUR, PROGRAMME INFORMATIQUE ET SYSTÈME

(43) Date of publication of application: 26.06.2024
(73) Proprietor: BEUMER Group GmbH & Co. KG, 59269 Beckum (DE)
(72) Inventor: Hiebler, David, 8020 Graz (AT); Temmer, Stefan, 8010 Österreich (AT)
(74) Representative: Angerhausen, Christoph

(56) References cited:
- WO-A1-2021/240235
- AU-A1- 2020 396 913
- US-A1- 2012 154 124

## Description

The invention relates to a method for checking the status of a component of a conveyor.

The invention further relates to a computer program for checking the status of a component of a conveyor, as well as a system for checking the status of a component of a conveyor.

The conveyor may be a rolling conveyor, bin conveyor or an overhead conveyor.

Overhead conveyors may be or comprise pouch conveyors or pouch sorters, where pouches are held by carriers and conveyed by moving the carriers along guide profiles.

Usually, pouches are not identified by human-readable identifiers. For instance, it is known to associate a pouch with a unique RFID-identifier, which is written to a tag being part of the carrier component of a pouch. A carrier having a RFID-tag is known from WO 2020/160585 A1, and a pouch having a RFID-tag is known from EP 3 147 240 A1. Systems and methods of materials handling employing RFID-tags are also known from US 2012/0154124 A1. A method for package delivery to fulfill customer orders is described in WO 2021/240235 A1. A system and method for monitoring conveyor components to determine maintenance requirements is disclosed in AU 2020 396 913 A1.

However, these tags are not readable by a human, which makes it difficult to identify or check the status of a dedicated or specified pouch, such as (physically) finding and locating a carrier or pouch in the overhead conveyor, or a bin, container or transport unit of a rolling conveyor or bin conveyor. Consequently, the pouch or carrier cannot be identified quickly, and neither can its status be checked quickly by person, such as a worker. Rather, the conveyor usually has a stationary reading device firmly mounted at or near the guide profile or one of its stations. EP 3 263 492 A1 discloses a transponder reading unit mounted at a guide profile of an overhead conveyor.

However, since such reading units are firmly mounted and stationary, they are not suitable to identify a specific pouch out of the many pouches along the guide profile. For instance, if a worker is tasked to check a specific pouch, e.g. if a control system determines a problem with some pouch and this pouch now has to be checked, said known systems are not suitable since they may identify only a pouch or carrier in their close vicinity. Moreover, the worker situated at the production line or guide profile usually cannot directly access the control system, but either has to go back to the control station or talk to a colleague manning the control station.

Since conveyors are complex systems with many components, this inevitably leads to technical defects and malfunctions, which must be detected at an early stage to ensure fast and uninterrupted operation of the conveying system. Fluctuations in the utilization of the system, which are difficult to predict, also cause difficulties in the operating process, which must be dealt with as proactively as possible. This results in a multitude of operational, analytical, administrative and maintenance-related monitoring tasks, and it is vital to quickly identify malfunctioning, failing or damaged components.

The invention solves these problems by providing a method according to claim 1, **a** computer program according to claim 11 and a system according to claim 12. The subject-matter of the respective dependent claims pertains to preferable embodiments.

The invention allows the worker, such as a user or operator, to identify a component of a conveyor, such as e.g. a pouch, carrier, bin, container or transport unit, easily and quickly by providing a mobile computer device with which a tag of the component, which uniquely identifies the component, can be read. The worker may walk to a component and scan or read its tag with the mobile computer device, thereby identifying the component. The mobile computer device can request status information associated with the tag, and thereby with the component, from a server. Thus, the worker may quickly and easily gain information regarding the component.

A first aspect of the invention relates to a method for checking the status of a component of a conveyor, the method comprising the steps:
a) Reading a tag with a mobile computer device, wherein the tag is arranged at the component and comprises a unique identifier;
b) Submitting an information request to a server connected with the mobile computer device, wherein submitting the information request comprises transmitting the unique identifier to the server; and
c) Transmitting status information associated with the unique identifier from the server to the mobile computer device.

The conveyor can be or comprise an overhead conveyor. The component can be or can comprise a pouch or a carrier of an overhead conveyor, pouch conveyor or a pouch sorter. Alternatively or additionally, the conveyor can be or comprise a rolling conveyor and/or a bin conveyor. It may be provided that the component can be or comprise a bin, loading unit, transport unit, and/or container. In some embodiments, the component can be a device which can be mounted to the conveyor, e.g. to overhead conveyor, rolling conveyor and/or bin conveyor, or which can be part of a conveyor station. Thereby, the invention allows identifying or checking the component, and/or retrieving status information of the component, also for e.g. equipment or machinery of the conveyor or its stations.

The mobile computer device may be or comprise a handheld device. The mobile computer device may be or comprise a smartphone, a personal digital assistant (PDA), a laptop, a netbook, a tablet or the like. The mobile computer device may have means for reading the tag, and for communicating with the server. Alternatively or additionally, in some embodiments, the mobile computer device may be connected to an extension, such as e.g. an USB-C or Bluetooth RFID reader, for reading the tag. In some embodiments, the extension may be disconnected from the mobile device after having read the tag.

The server can be or comprise a cloud server. In some embodiments, the server may be or comprise an on-premise server.

The tag can be or can comprise a RFID-tag. When reading the tag, the tag can be read via near-field communication (NFC). In some embodiments, the tag can be or comprise a barcode, QR-code and/or alphanumeric code, which can be e.g. optically read. Reading the tag may comprise scanning the tag.

In some embodiments, after transmitting the status information and/or after the mobile computer device has received the status information, the status information can be displayed by the mobile computer device. The mobile computer device can analyze the status information for anomalies. The mobile computer device can highlight anomalous status information. In some embodiments, the server can analyze the status information for anomalies, and flag status information as anomalous before, when or after transmitting the status information to the mobile computer device. In some embodiments, the status information transmitted from the server may comprise flags indicating anomalies. The mobile computer device may highlight those parts of status information, which are flagged. In some embodiments, the status information transmitted from the server may comprise diagnostics and/or diagnostic data.

For instance, the server may detect that a component is having a problem, and/or may infer a problem from status information of the component. If a problem is detected, the respective status information may be flagged as anomalous. In some embodiments, the server may send an alarm notification regarding a specific component to the mobile computer device, when an anomaly or a problem has been detected.

The status information can comprise one or more of component name, currently booked location of the component, currently contained item, status of currently contained item, currently assigned order, one or multiple current destinations for the component, incident of the component, and/or utilization details.

It can be provided that, before submitting the information request and/or reading the tag, the mobile computer device can connect to the server via Wi-Fi or LTE. Additionally or alternatively, the mobile computer device can connect to, or be connected to, the server via narrowband-Internet of Things (narrowband IOT) and/or a low-power wide-area network. In some embodiments, the connection between mobile computer device and server may be a wireless connection.

In some embodiments, before the tag is read, the server can transmit a read request to the mobile computer device to read a tag. The read request may be shown by the mobile computer device. The read request may specify a component to be read, such as e.g. a specific pouch or carrier. For instance, the read request may comprise a message such as e.g. "the third Pouch in sequencing lane 4 of level 3 is to be scanned", which allows the user to find the specific component whose tag is to be read. In some embodiments, it may be provided that the mobile computer display shows an error or warning message, when the scanned or read tag of the component does not correspond to the requested tag.

It may be provided that mobile computer device may receive an alarm notification from the server. The alarm notification may comprise alarm data of at least one component of the conveyor. The alarm data can comprise information about malfunctions and/or a utilization and/or a delay. In addition, the alarm data may include component-specific information, such as a jam within the component, a full chute, a calibration, a maintenance mode, or a power off condition. The alarm notification can be sent by the server before sending the read request. In some embodiments, the read request may comprise the alarm notification. The alarm notification and/or reads request may include a prioritization that represents an urgency for the user to intervene. The mobile computer device can output a visual/or audible alarm message, when or after the alarm notification has been received.

In some embodiments, before or when sending the alarm notification and/or read request, the server can compute a proposed problem solution, e.g. by using a database containing known problems and their respectively associated known problem solutions. The server may send the problem solution to the mobile computer device when or after sending the alarm notification and/or read request. Alternatively or additionally, the mobile computer device may compute the proposed problem solution and/or access the database containing known problems and their respective solutions, when or after receiving the alarm notification and/or read request. The mobile computing device may present the known problem solution to the user.

In some embodiments, after transmitting the status information and/or after the mobile computer device has received the status information, the mobile computer device can transmit a control command to the server. In some embodiments, the user may use mobile computer device to send the control command. Sending the control command may comprise sending the unique identifier to the server.

The control command can comprise at least one of adding an item to the component, such as e.g. pouch, bin or container, removing an item from the component, cancelling an order, sending the component to a specified conveyor station, e.g. a clearing station, and/or retrieving the component. The control command can comprise at least one command instructing the conveyor and/or server to add an item to the component, to remove an item from the component, to cancel an order, to send the component to a specified conveyor station, e.g. a clearing station, workplace, and/or to retrieve the component.

The server can update the associated status information. In some embodiments, the server can update the associated status information after having received the control command. In some embodiments, the server can repeatedly, or periodically, interrogate or poll one, multiple or all components in order to update the status information.

In some embodiments, the mobile computer device may send updated status data to the server, and the server may update the stored status information with the updated status data received from the mobile computer device. It may be provided that the user may input updated status data via the mobile device. In some embodiments, the user may input updated status data after having read the tag, and/or after the status information has been requested from the server.

It may be provided that, after having received the control command, the server can send a confirmation to the mobile computer device. The confirmation may comprise a message. The confirmation and/or message can be displayed by the mobile computer device. It can be provided that, in case that the control command has failed or could not be carried out, the server send a failure message to the mobile computer device. The failure message may contain or comprise a reason for failure. The failure message can be displayed by the mobile computer device.

At least one or more steps of the method may be computer-implemented. It may be provided that at least one or more steps of the method may be carried out by a computer program, such as e.g. an app, running on the mobile computer device. The computer program and/or app may comprise a graphical user interface (GUI). The GUI may display data, status information, and/or figures or text related to the component and/or tag. It may be provided that a user may use GUI to input commands.

A second aspect of the invention relates to a computer program comprising instructions which, when the program is executed on a mobile computer device, cause the mobile computer device to carry out at least steps a) and b) of the method as described above. It may be provided that the computer program may cause the mobile computer device to carry out additional steps of one or more embodiments as described above.

Another aspect of the invention relates to a system for checking the status of a component of a conveyor, the system comprising a conveyor having at least one component, the component having a tag comprising a unique identifier, the system further comprising a server and a mobile computer device, connected to the server, wherein the mobile computer device is configured to read the tag and transmit an information request and the unique identifier to the server, the server having a database in which status information associated with the unique identifier is stored, the server being configure to transmit, after having received the unique identifier, the associated status information to the mobile computer device.

The system is configured to carry out the method as described above.

The mobile computer device may be or comprise a handheld device. The mobile computer device may be or comprise a smartphone, a personal digital assistant (PDA), a laptop, a netbook, a tablet or the like. The mobile computer device may have means for reading the tag, and for communicating with the server. The mobile computer device may be configured to run the computer program and/or app. In some embodiments, the computer program or app may lead the user to the component, e.g. by displaying a route on a digital map. It may be provided that the server submits routing data for calculating the route, and/or routing data describing or comprising the route, to the mobile computer device. For instance, when the server sends a read request to the mobile computer device to read a tag, the server may send routing data to the mobile computer device.

The tag can be or can comprise a RFID-tag. When reading the tag, the tag can be read via near-field communication (NFC). In some embodiments, the tag can be or comprise a barcode, QR-code and/or alphanumeric code, which can be e.g. optically read. Reading the tag may comprise scanning the tag.

The server can be an on-premise server. Alternatively or additionally, the mobile computer device can be connected via WLAN, Wi-Fi or LTE to the server. In some embodiments, the server may be a cloud-server. Additionally or alternatively, the mobile computer device can connect to, or be connected to, the server via narrowband-Internet of Things (narrowband IOT) and/or a low-power wide-area network. In some embodiments, the connection between mobile computer device and server may be a wireless connection.

The mobile computer device can be configured to send a control command to the server. The server can be configured to control the conveyor in response to the control command.

The conveyor can be or comprise an overhead conveyor, a pouch conveyor or pouch sorter. Alternatively or additionally, the conveyor can be or comprise a bin conveyor and/or a rolling conveyor. The component can be or comprise a pouch and/or a carrier, such as e.g. a pouch or carrier of an overhead conveyor. In some embodiments, it may be provided that the container is or comprises a bin, container and/ or transport unit, such as e.g. bin, container and/ or transport of a bin container and/or rolling container. Alternatively or additionally, the component can be or comprise a device mounted on an installation point of the conveyor, and/or a container station.

The server can be configured to check the components for anomalies. The server can be configured to send a notification to the mobile computer device when an anomaly is detected.

The invention is further described with respect to the following figures:
- Fig. 1: a schematical view of an exemplary embodiment of a system according to the invention;
- Fig. 2: a schematical view of another exemplary embodiment of a system according to the invention; and
- Fig. 3: a schematical view of another exemplary embodiment of a system according to the invention.

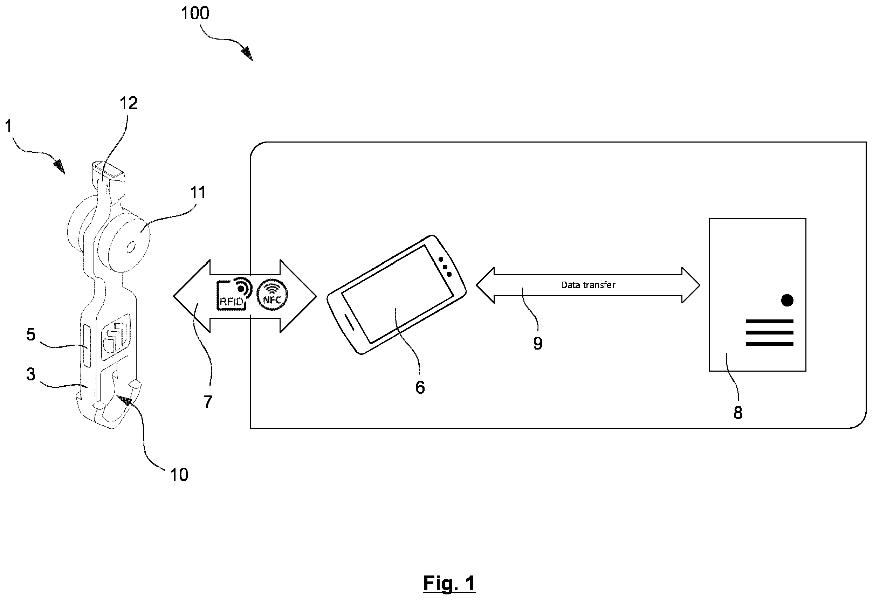

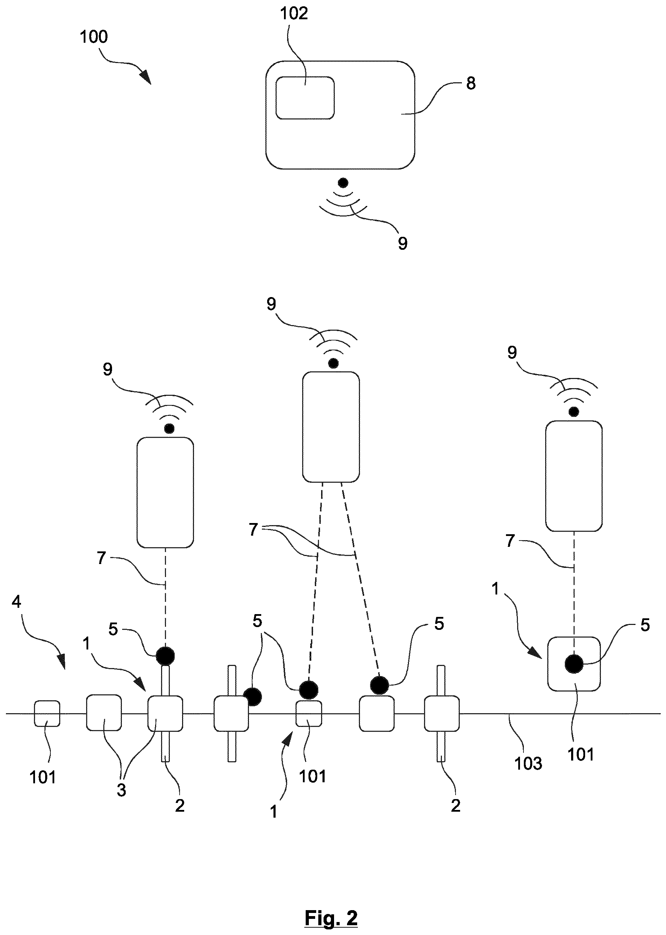

Figure 1 and 2 show exemplary embodiments of a system 100 according to the invention. The system 100 comprises a conveyor 4. The conveyor 4 may be or comprise an overhead conveyor and/or a pouch conveyor. In some embodiments, the conveyor 4 may be or comprise a pouch sorter. The conveyor 4 has at least one component 1. The component 1 may be or comprise a carrier 3. At least one component 1 may be or comprise a carrier 3. Additionally or alternatively, the component 1 can be or comprise a pouch 2. At least one component 1 may be or comprise a pouch 2. The pouch 2 may be carried or held by carrier 3.

In some embodiments, the conveyor 4 may be or comprise a bin conveyor and/or a rolling conveyor. The component 2 may be or comprise a bin and/or container, such as e,g. bin and/or container of a bin conveyor and/or rolling conveyor. Alternatively or additionally, the component 2 may be or comprise a transport unit of a bin conveyor and/or rolling conveyor. The transport unit may be configured to transport one or multiple bins and/or containers, and/or transport one or multiple bins and/or containers.

In some embodiments, the carrier to may have a receptacle 10 for carrying or holding the pouch 2. It may be provided that every carrier 3 can carry or hold a pouch 2. In some embodiments, at least one carrier 3 may not carry or hold a pouch 2. The conveyor 4, such as e.g. overhead conveyor, may have means for moving carrier 3. In some embodiments, carrier 3 may have an end piece 12, e.g. having a coupling piece, which may be used to move or convey the carrier 2. For instance, the end piece 12 and/or coupling piece may be coupled to a chain (not shown in the figures) such that carrier 3 can be moved and/or conveyed when the chain is moved and/or conveyed. End piece 12 and/or coupling piece may be mechanically coupled to the chain. Additionally or alternatively, and piece 12 and or coupling piece may be magnetically coupled to the chain. Carrier 3 may have at least one roller 11 with which it may be guided along or in a guide profile 103 of the conveyor 4, such as e.g. overhead conveyor.

In some embodiments, at least one component 1 may be or comprise an installation point 101, and/or a device mounted on or at installation point 101. The installation point 101 and/or the device may be arranged at or be part of a conveyor station. Alternatively, installation point 101 may be a support of guide profile 103. At least one of the components 1 may be stationary. In some embodiments, the device may e.g. track throughput, e.g. as function of time, and/or a filling degree of a pouch 2.

The component 1 comprises a tag 5. The tag 5 can be arranged on or at the component 1, e.g. on, in or at a surface. The tag 5 comprises a unique identifier. The unique identifier may uniquely identify the component 1. In some embodiments, the tag 5 may be or comprise a RFID-tag. Alternatively or additionally, the tag 5 may be or comprise a QR code, barcode, a symbol, and/or an alphanumeric code. Each component 1 may have a tag 5, which uniquely identifies the respective component 1.

The system 100 comprises a mobile computer device 6. The mobile computer device 6 can be or comprise a smartphone. In some embodiments, the mobile computer device 6 can be or comprise a handheld device. In some embodiments, the mobile computer device 6 can be or comprise e.g. a laptop, a netbook, a personal digital assistant (PDA), a tablet, a smartwatch and/or smart glasses.

The mobile computer device 6 is configured to read tag 5, and/or information contained, represented or comprised by tag 5. The mobile computer device 6 can read tag 5, and/or information contained, represented or comprised by tag 5. The mobile computer device 6 can have means for reading tag 5, and/or information contained, represented or comprised by tag 5. When tag 5 is an RFID tag, it may be provided that tag 5 is read via near field communication (NFC). When tag 5 is a QR code, barcode, a symbol, and/or an alphanumeric code, it may be provided that tag 5 is read via an optical camera. In other words, tag reading 7 may be carried out via NFC or optical detection of tag 5. In some embodiment, reading the tag 5 and/or tag reading 7 may comprise scanning the tag 5.

It may be provided that a mobile computer device 6 may read tags 5 of more than one component 1. In some embodiments, mobile computer device 6 can read tags 5 of at least two components 1, substantially at the same time or overlapping.

It can be provided that a user, such as a worker or operator, can use the mobile computer device 6 to read the tag 5 of component 1. By reading tag 5 with the mobile computer device 6, the user can identify component 1, check the status or component 1 and/or receive status information of component 1.

The system 100 has a server 8. Mobile computer device 6 may be connected to or with server 8, and/or can connect to server 8. Mobile computer device 6 may be configured to connect to server 8 via connection 9. In some embodiments, server 8 may be an on-premise server, e.g. In the vicinity or close by the conveyor 4, and or on the premises where conveyor 4 s located. Mobile computer device 6 may be connected to server 8 via a local area network. The connection 9 between mobile computer device 6 and server 8 can be wireless. In some embodiments, mobile computer device 6 and server 8 can be connected via Wi-Fi. Alternatively or additionally, mobile computer device 6 and surveyed can be connected via LTE, narrowband Internet-of-things, or a low-power-wide-area network. In some embodiments, the server 8 may be alternatively or additionally cloud-based, and/or not on-premise.

The mobile computer device 6 can communicate with server 8. The mobile computer device 6 can send or submit an information request to the server 8. The information request can comprise transmitting or sending the unique identifier to the server 8. By sending or submitting the information request, the mobile computer device 6 can request status information from server 8. The status information can be associated with the unique identifier read from the tag 5. The status information can be stored in or on the server 8, e.g. in a database 102. In some embodiments, server 8 may be connected to or more devices mounted at or on installation points 101. Server 8 may receive data from the devices, such as e.g. throughput or filling degree of a pouch.

The status information can comprise a name of the component 1. In some embodiments, the name of the component 1 is a unique name. Alternatively or additionally, the status information can comprise a currently booked location of the component, such as e.g. its current or assumed position or location, or destination. Alternatively or additionally, the status information can comprise a currently contained, conveyed or stored item, such as e.g. an item or object carried in a pouch 2, and/or in a pouch 2 conveyed by carrier 3. Alternatively or additionally, the status information can comprise a status of currently contained item, such as e.g. the status of an item or object carried in a pouch 2, and/or in a pouch 2 conveyed by carrier 3. The status may comprise e.g. a due date, and/or information regarding a condition and/or state of the item or object. Alternatively or additionally, the status information can comprise a currently assigned order, such as e.g. where the component 1, e.g. pouch 2 or carrier 3, is to be conveyor, where it is to be loaded or unloaded, which items or objects are to be stored therein, or the like. Alternatively or additionally, the status information can comprise a destination of component 1, such as e.g. a destination where pouch 2 or carrier 3 are to be conveyed. For instance, the destination may be or comprise a specific conveyor station, such as e.g. a loading station or unloading station, a storage, a buffer, a transfer station, clearing station or the like. Alternatively or additionally, the status information can comprise an incident of the component 1, such as e.g. jams, malfunctions, crashes or accidents, or whether component 1 is stuck or not. The status information may further comprise information regarding the cause of incidents. Alternatively or additionally, the status information can comprise utilization details, such as e.g. the number of circulations of component 1, e.g. pouch 2 or carrier 3, within conveyor 4, and/or throughput as measured by a device mounted on installation point 101.

Having received the information request, the server 8 can transmit or send status information associated with the unique identifier to the mobile computer device 6.

After having received the status information, the mobile computer device 6 can display the status information. The mobile computer device 6 can be configured to display the status information. By displaying the status information, the status information of component one whose tag 5 has been read can be shown or displayed to the user.

In some embodiments, the mobile computer device 6 can highlight anomalous status information. In case that some status information is anomalous, it may be provided in some embodiments that only the anomalous parts may be highlighted. In some embodiments, the mobile computer device 6 can check the status information for anomalies. The status information, or part of the status information can be flagged as anomalous. It may be provided that the server can flag the status information, when the server detects an anomaly of the respective component 1. For instance, the server 8 may monitor components 1 for anomalies such as e.g. malfunctions, damages, technical defects, crashes, jams, and the like. In some embodiments, detecting anomalies may not be carried out by the server 8, but an additional compute unit (not shown in the figures )connected to the server 8.

The mobile computer device 6 can be configured to send or submit a control command to the server 8, and/or the mobile computer device 6 can send or submit a control command to the server 8. The control command can pertain to the component 1 whose tag 5 has been read, and/or whose unique identifier has been scanned and/or submitted to the server 8. The user can send the control command to the server 8 by use of the mobile computer device 6.

The control command can comprise adding an item to the component 1. In some embodiments, adding an item to the component 1 can comprise moving the component 1 to a loading station, where the item is to be added or loaded into the component 1, such as e.g. pouch 2. Alternatively or additionally, the control command can comprise removing an item from the component 1. In some embodiments, removing the item can comprise moving the component 1 to an unloading station, where an item contained in the component 1, e.g. in pouch 2, may be removed or unloaded from component 1, e.g. from pouch 2. Alternatively or additionally, the control command can comprise cancelling an order. Cancelling an order can comprise removing the component 1 and/or an item contained in component 1 from an order list, returning an item contained in component 1 to a warehouse or storage, or, when an item pertaining to the cancelled order is not yet contained in the component 1, preventing, stopping or not carrying out any action for loading the item in the component 1. Alternatively or additionally, the control command can comprise retrieving the component 1, e.g. pouch 2 or carrier 3. Retrieving the component 1 can comprise removing the component 1 from system 100 and/or conveyor 4. Alternatively or additionally, the control command can comprise sending or moving the component 1 to a specified conveyor station.

The specified station and/or a conveyor station can be or comprise a loading station or unloading station, a storage, a buffer, a transfer station, clearing station or the like. At a clearing station, the component 1, e.g. pouch 2, carrier 3, bin, container and/or transport unit, may be removed from system 100 and/or conveyor 4. A storage may be used to store items, and/or components 1 of the conveyor 4. A buffer may be used to buffer carriers 3, and/or pouches 2, bins, containers and/or transport units. The buffer may be or comprise a dynamic buffer. At or with a transfer station, a carrier 3 and/or transport unit may be transferred from a first conveyor to a second conveyor of system 100 or vice versa. In some embodiments, at or with a transfer station, a pouch 2 and/or a container or bin of a first conveyor 4 and/or items stored in a pouch 2, container and/or bin may be transferred to load handling means of a second transport system. The second transport system may be or comprise a conveyor, a tilt tray sorter or a cross-belt sorter, and/or a second conveyor such as overhead conveyor, e.g. pouch conveyor or pouch sorter, or bin conveyor and/or rolling conveyor. The load handling means of second transport system may be or comprise a pouch, a tray, a cross-belt, a bin, a container, a conveyor belt or the like.

The server 8 can be configured to control, or control, the conveyor 4 such as to carry out the control command. Server 8 may control movement of components 1, e.g. pouches 2 or carriers 3, and/or control the conveyor stations.

After having received the control command, the server 8 may update the status information. In some embodiments, the server 8 may update the status information when the control command is or has been carried out. In some embodiments, the server 8 may repeatedly, e.g. periodically, interrogate or poll one or more, or all, components 1 regarding their status and/or for updating the status information.

After having received the control command, the server 8 can send or transmit a confirmation to the mobile computer device 6. The confirmation may comprise a message that the control command has been or is carried out. It may be provided that, in case the control command has not been carried out and/ or could not be carried out, the server 8 can send or transmit a failure message to the mobile computer device 6. Failure message may contain or comprise reasons for failure.

The mobile computer device 6 may be configured to run a computer program, e.g. an app, via which the user may scan or read tag 5, or at least initiate reading tag 5. In some embodiments, the app may have a graphical user interface (GUI). Via computer program or app, the user may send a control command to the server 8. The computer program or app may be configured to display or show status information.

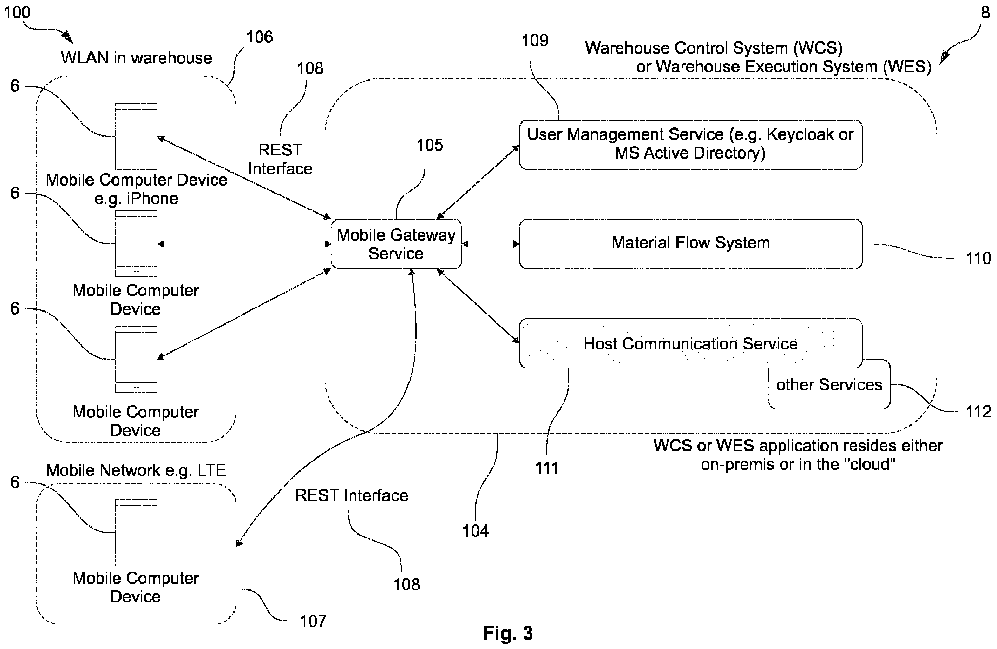

Fig. 3 shows an exemplary embodiment of a system according to the invention. The system may have one, several or all features and/or advantages of systems described above and/or shown in Figs. 1 and 2. Further, fig. 3 shows an exemplary system architecture.

The system may have or comprise a control system 104. The control system may comprise a mobile gateway service 105, a user management service 109, a material flow system 110, a host communication service 111 and/or other services 112. The mobile gateway service 105, the user management service 109, the material flow system 110, the host communication service 111 and/or the other services 112 may be computer-implemented.

At least one, or multiple, mobile computer devices 6 may be connected to the control system 104 and/or mobile gateway service 105.

The mobile gateway service 105 may communicate with the mobile computer devices 6 connected thereto, and/or all mobile computer devices 6 on which the app is running, or on which any other frontend application, such as e.g. a browser, is running. The server 8, the mobile gateway service 105, and/or the control system 104, may be or comprise a backend for the app and/or the mobile computer device 6. The app and/or the mobile computer device 6 may serve as frontend.

It may be provided that at least one mobile device 6 is connected to network 106, such as e.g. a low-power wide-area network or a local WLAN, e.g. a local warehouse WLAN. Via network 106, the mobile device 6 may be connected to the mobile gateway service 105 and/or the control system 104, such as to send and/or receive data, requests and/or status information. The mobile device 6 may send and/or receive commands to or from the backend, server 8, mobile gateway service 105 and/or the control system 104, which commands may add, remove and/or change data concerning the loading unit, pouch, bin and/or pallet. It may be provided that at least one mobile device 6 is connected to network 107, such as e.g. a mobile network, e.g. LTE, GSM or the like. Via network 107, the mobile device 6 may be connected to the mobile gateway service 105 and/or the control system 104, such as to send and/or receive data, requests and/or status information. In some embodiments, at least one mobile device 6 may be connected to network 106, and at least one mobile device 6 may be connected to network 107.

In some embodiments, it may be provided that a mobile device 6 is connected both to network 106 and network 107. Thereby, failure of one of the networks 106, 107 may be compensated by the other network 106, 107.

Mobile device 6 and mobile gateway service 105 and/or control system 104 may interface via an interface 108 such as REST (representational state transfer). The system architecture may be or comprise a REST architecture. Such an architecture , or at least parts of it, can be carried out and/or configured in an encrypted and/or authenticated way. In some embodiments, the architecture, or at least parts of it, can be carried out and/or configured in a plain, unsecure way.

The mobile gateway service 105 may receive and/or send data or request from or to the user management service 109, the material flow system 110, the host communication service 111 and/or the other services 112. The mobile gateway service 105 can aggregate and/or prepare data, such as e.g. status information, data received from mobile computer device 6 and/or data received from user management service 109, material flow system 110, host communication service 111 and/or other services 112. For instance, mobile gateway service 105 may prepare, modify or aggregate data for illustration on the mobile computer device 6 and/or app.

In some embodiments, the control system 104 may be configured to carry out one or more steps of one, several or all disclosed methods. In some embodiments. The mobile gateway service 105 may be configured to carry out one or more of one, several or all disclosed methods, in some embodiments in conjunction with one or more of user management service 109, material flow system 110, host communication service 111 and/or other services 112

The user management system 109 may be configured to manage, store, update, and/or handle user data. The user management system 109 may be configured for authentication or administration of user profiles or accounts, such as e.g. registering new users, user rights, storing passwords, and the like.

The material flow system 110 may be configured to manage, store, update, and/or handle data regarding the conveyor or components, and/or transport goods, such as e.g. status information data, or data pertaining to the flow of materials through the conveyor.

The host communication service 111 may be configured to connect the system and/or the control system to other servers not part of the system and/or control system, and/or exchange data with other servers not part of the system and/or control system.

Auxiliary or additional functions or functionality may be provided by other services 112.

The control system 104, mobile gateway service 105, user management service 109, material flow system 110, host communication service 111 and/or other services 112 may run on server 8. The server may be or comprise a distributed system, and/or distributed server. The server 8 may be on-premise, and/or cloud-based.

### List of reference numerals:

- 1: component
- 2: pouch
- 3: carrier
- 4: conveyor
- 5: tag
- 6: mobile computer device
- 7: tag reading
- 8: server
- 9: wireless connection
- 10: receptacle
- 11: roller
- 12: end piece

- 100: system
- 101: installation point
- 102: database
- 103: guide profile
- 104: control system
- 105: mobile gateway service
- 106: network
- 107: network
- 108: interface
- 109: user management system
- 1110: material flow system
- 111: host communication system
- 112: other services

## Claims

1. A method for checking the status of a component (1) of a conveyor (4), preferably of a conveyor station, a pouch (2) or a carrier (3) of an overhead conveyor and/or a bin or transport unit of a bin conveyor or a rolling conveyor,, the method comprising the steps:
a) Reading a tag (5) with a mobile computer device (6), preferably a smartphone, wherein the tag (5) is arranged at the component (1) and comprises a unique identifier;
b) Submitting an information request to a server (8) connected with the mobile computer device (6), wherein submitting the information request comprises transmitting the unique identifier to the server (8); and
c) Transmitting status information associated with the unique identifier from the server (8) to the mobile computer device (6).

2. The method of claim 1, wherein the tag (5) is or comprises a RFID-tag, wherein when reading the tag (5), the tag (5) is preferably read via NFC, and/or wherein the tag (5) comprises a barcode, QR-Code and/or alphanumeric Code, the tag (5) being preferably optically read.

3. The method of claim 1 or 2, wherein after transmitting the status information and/or after the mobile computer device (6) has received the status information, the status information is displayed by the mobile computer device (6), wherein preferably the mobile computer device (6) analyzes the status information for anomalies and highlights anomalous status information.

4. The method of any of the preceding claims, wherein the status information comprises one or more of component (1) name, currently booked location of the component (1), currently contained item, status of currently contained item, currently assigned order, current destination for the component (1), incident of the component (1), and/or utilization details.

5. The method of any of the preceding claims, wherein before submitting the information request and/or reading the tag (5), the mobile computer device (6) connects to the server (8) via Wi-Fi or LTE.

6. The method of any of the preceding claims, wherein, before the tag (5) is read, the server (8) transmits a read request to the mobile computer device (6) to read a tag (5).

7. The method of any of the preceding claims, wherein after transmitting the status information and/or after the mobile computer device (6) has received the status information, the mobile computer device (6) transmits a control command to the server (8).

8. The method of claim 7, wherein the control command comprises at least one of adding an item to the component (1), removing an item from the component (1), cancelling an order, sending the component (1) to a specified conveyor station, e.g. a clearing station, and/or retrieving the component (1).

9. The method of any of claims 7 or 8, wherein the server (8) updates the associated status information, preferably after having received the control command.

10. The method of any of claims 7 to 9, wherein after having received the control command, the server (8) sends a confirmation to the mobile computer device (6).

11. A computer program comprising instructions which, when the program is executed on a mobile computer device (6), preferably a smartphone, cause the mobile computer device (6) to carry out the steps a) and b) of claim 1, and preferably the steps of any of claims 2 to 8.

12. A system for checking the status of a component (1) of a conveyor (4), the system (100) comprising a conveyor (4) having at least one component (1), the component (1) having a tag (5) comprising a unique identifier, the system (100) further comprising a server (8) and a mobile computer device (6), preferably a smartphone, connected to the server (8), wherein the mobile computer device (6) is configured to read the tag (5) and transmit an information request and the unique identifier to the server (8), the server (8) having a database (102) in which status information associated with the unique identifier is stored, the server (8) being configured to transmit, after having received the unique identifier, the associated status information to the mobile computer device (6), wherein the system (100) is configured to carry out the method of any of claims 1 to 9.

13. The system (100) of claim 12, wherein the tag (5) is or comprises a RFID-tag, wherein the mobile computer device (6) is preferably configured to read the tag (5) via NFC, and/or wherein the wherein the tag (5) comprises a barcode, QR-Code and/or alphanumeric Code, the tag (5) being preferably optically read.

14. The system (100) of claim 12 or 13, wherein the server (8) is an on-premise server (8) and/or the mobile computer device (6) is connected via Wi-Fi or LTE to the server (8).

15. The system (100) of any claims 12 to 14, wherein the mobile computer device (6) is configured to send a control command to the server (8), wherein the server (8) is configured to control the conveyor (4) in response to the control command.

16. The system (100) of any of claims 12 to 15, wherein the conveyor (4) is or comprises an overhead conveyor, rolling conveyor or bin conveyor, and/or wherein the component (1) is or comprises a pouch (2), a carrier (3), a bin, a transport unit, a conveyor station and/or a device mounted on an installation point (101) of the conveyor (4).

17. The system (100) of any of claims 12 to 16, wherein the server (8) is configured to check the components (1) for anomalies and is further configured to send a notification to the mobile computer device (6), when an anomaly is detected.

## Patentansprüche

1. Verfahren zum Überprüfen des Zustands einer Komponente (1) eines Förderers (4), vorzugsweise einer Förderstation, einer Tasche (2) oder eines Carriers (3) eines Hängeförderers und/oder eines Behälters oder einer Transporteinheit eines Behälterförderers oder eines Rollförderers, wobei das Verfahren die folgenden Schritte umfasst:
a) Lesen eines Tags (5) mit einer mobilen Computervorrichtung (6), vorzugsweise einem Smartphone, wobei das Tag (5) an der Komponente (1) angeordnet ist und eine eindeutige Kennung umfasst;
b) Übermitteln einer Informationsanforderung an einen Server (8), der mit der mobilen Computervorrichtung (6) verbunden ist, wobei das Übermitteln der Informationsanforderung das Übertragen der eindeutigen Kennung an den Server (8) umfasst; und
c) Übertragen von Zustandsinformationen, die der eindeutigen Kennung zugeordnet sind, von dem Server (8) an die mobile Computervorrichtung (6).

2. Verfahren nach Anspruch 1, wobei das Tag (5) ein RFID-Tag ist oder umfasst, wobei beim Lesen des Tags (5) das Tag (5) vorzugsweise über NFC gelesen wird, und/oder wobei das Tag (5) einen Barcode, QR-Code und/oder alphanumerischen Code umfasst, wobei das Tag (5) vorzugsweise optisch gelesen wird.

3. Verfahren nach Anspruch 1 oder 2, wobei nach dem Übertragen der Zustandsinformationen und/oder nachdem die mobile Computervorrichtung (6) die Zustandsinformationen empfangen hat, die Zustandsinformationen durch die mobile Computervorrichtung (6) angezeigt werden, wobei vorzugsweise die mobile Computervorrichtung (6) die Zustandsinformationen auf Anomalien analysiert und anomale Zustandsinformationen hervorhebt.

4. Verfahren nach einem der vorhergehenden Ansprüche, wobei die Zustandsinformationen einen oder mehrere von dem Namen der Komponente (1), dem aktuell gebuchten Standort der Komponente (1), dem aktuell enthaltenen Gegenstand, dem Zustand des aktuell enthaltenen Gegenstands, der aktuell zugewiesenen Reihenfolge, dem aktuellen Ziel für die Komponente (1), dem Vorfall der Komponente (1) und/oder Nutzungsdetails umfassen.

5. Verfahren nach einem der vorhergehenden Ansprüche, wobei sich die mobile Computervorrichtung (6) vor dem Übermitteln der Informationsanforderung und/oder dem Lesen des Tags (5) über Wi-Fi oder LTE mit dem Server (8) verbindet.

6. Verfahren nach einem der vorhergehenden Ansprüche, wobei der Server (8), bevor das Tag (5) gelesen wird, eine Leseanforderung an die mobile Computervorrichtung (6) überträgt, um ein Tag (5) zu lesen.

7. Verfahren nach einem der vorhergehenden Ansprüche, wobei die mobile Computervorrichtung (6) nach dem Übertragen der Zustandsinformationen und/oder nachdem die mobile Computervorrichtung (6) die Zustandsinformationen empfangen hat, einen Steuerbefehl an den Server (8) überträgt.

8. Verfahren nach Anspruch 7, wobei der Steuerbefehl mindestens eines von dem Hinzufügen eines Gegenstands zu der Komponente (1), dem Entfernen eines Gegenstands von der Komponente (1), dem Aufheben einer Reihenfolge, dem Senden der Komponente (1) an eine bestimmte Förderstation, z. B. eine Räumstation, und/oder dem Abrufen der Komponente (1) umfasst.

9. Verfahren nach einem der Ansprüche 7 oder 8, wobei der Server (8) die zugeordneten Zustandsinformationen aktualisiert, vorzugsweise nachdem er den Steuerbefehl empfangen hat.

10. Verfahren nach einem der Ansprüche 7 bis 9, wobei der Server (8), nachdem er den Steuerbefehl empfangen hat, eine Bestätigung an die mobile Computervorrichtung (6) sendet.

11. Computerprogramm, das Anweisungen umfasst, die, wenn das Programm auf einer mobilen Computervorrichtung (6), vorzugsweise einem Smartphone, ausgeführt wird, die mobile Computervorrichtung (6) veranlassen, die Schritte a) und b) nach Anspruch 1 und vorzugsweise die Schritte nach einem der Ansprüche 2 bis 8 auszuführen.

12. System zum Überprüfen des Zustands einer Komponente (1) eines Förderers (4), wobei das System (100) einen Förderer (4) umfasst, der mindestens eine Komponente (1) aufweist, wobei die Komponente (1) ein Tag (5) aufweist, das eine eindeutige Kennung umfasst, wobei das System (100) ferner einen Server (8) und eine mobile Computervorrichtung (6), vorzugsweise ein Smartphone, umfasst, die mit dem Server (8) verbunden ist, wobei die mobile Computervorrichtung (6) konfiguriert ist, um das Tag (5) zu lesen und eine Informationsanforderung und die eindeutige Kennung an den Server (8) zu übertragen, wobei der Server (8) eine Datenbank (102) aufweist, in der Zustandsinformationen gespeichert sind, die der eindeutigen Kennung zugeordnet sind, wobei der Server (8) konfiguriert ist, um, nachdem er die eindeutige Kennung empfangen hat, die zugeordneten Zustandsinformationen an die mobile Computervorrichtung (6) zu übertragen, wobei das System (100) konfiguriert ist, um das Verfahren nach einem der Ansprüche 1 bis 9 auszuführen.

13. System (100) nach Anspruch 12, wobei das Tag (5) ein RFID-Tag ist oder umfasst, wobei die mobile Computervorrichtung (6) vorzugsweise konfiguriert ist, um das Tag (5) über NFC zu lesen, und/oder wobei das Tag (5) einen Barcode, QR-Code und/oder alphanumerischen Code umfasst, wobei das Tag (5) vorzugsweise optisch gelesen wird.

14. System (100) nach Anspruch 12 oder 13, wobei der Server (8) ein lokaler Server (8) ist und/oder die mobile Computervorrichtung (6) über Wi-Fi oder LTE mit dem Server (8) verbunden ist.

15. System (100) nach einem der Ansprüche 12 bis 14, wobei die mobile Computervorrichtung (6) konfiguriert ist, um einen Steuerbefehl an den Server (8) zu senden, wobei der Server (8) konfiguriert ist, um den Förderer (4) als Reaktion auf den Steuerbefehl zu steuern.

16. System (100) nach einem der Ansprüche 12 bis 15, wobei der Förderer (4) ein Hängeförderer, Rollförderer oder Behälterförderer ist oder umfasst und/oder wobei die Komponente (1) eine Tasche (2), ein Carrier (3), ein Behälter, eine Transporteinheit, eine Förderstation und/oder eine Vorrichtung ist oder umfasst, die an einem Installationspunkt (101) des Förderers (4) montiert ist.

17. System (100) nach einem der Ansprüche 12 bis 16, wobei der Server (8) konfiguriert ist, um die Komponenten (1) auf Anomalien zu überprüfen, und ferner konfiguriert ist, um eine Benachrichtigung an die mobile Computervorrichtung (6) zu senden, wenn eine Anomalie detektiert wird.

## Revendications

1. Procédé de vérification de l'état d'un composant (1) d'un convoyeur (4), de préférence d'une station de convoyage, d'une poche (2) ou d'un support (3) d'un convoyeur aérien et/ou d'une benne ou d'une unité de transport d'un convoyeur à bennes ou d'un convoyeur à rouleaux, le procédé comprenant les étapes suivantes :
a) lecture d'une étiquette (5) avec un dispositif informatique mobile (6), de préférence un smartphone, l'étiquette (5) étant disposée sur le composant (1) et comprenant un identifiant unique ;
b) soumission d'une demande d'informations à un serveur (8) connecté au dispositif informatique mobile (6), la soumission de la demande d'informations comprenant la transmission de l'identifiant unique au serveur (8) ; et
c) transmission d'informations d'état associées à l'identifiant unique du serveur (8) au dispositif informatique mobile (6).

2. Procédé selon la revendication 1, dans lequel l'étiquette (5) est ou comprend une étiquette RFID, l'étiquette (5), lors de la lecture de l'étiquette (5), étant de préférence lue par NFC, et/ou l'étiquette (5) comprenant un code à barres, un code QR et/ou un code alphanumérique, l'étiquette (5) étant de préférence lue optiquement.

3. Procédé selon la revendication 1 ou 2, dans lequel, après la transmission des informations d'état et/ou après que le dispositif informatique mobile (6) a reçu les informations d'état, les informations d'état sont affichées par le dispositif informatique mobile (6), le dispositif informatique mobile (6) analysant de préférence les informations d'état à la recherche d'anomalies et mettant en évidence des informations d'état anormales.

4. Procédé selon l'une quelconque des revendications précédentes, dans lequel les informations d'état comprennent un ou plusieurs éléments parmi le nom du composant (1), l'emplacement actuellement réservé du composant (1), l'article actuellement contenu, l'état de l'article actuellement contenu, la commande actuellement attribuée, la destination actuelle pour le composant (1), l'incident du composant (1), et/ou des détails d'utilisation.

5. Procédé selon l'une quelconque des revendications précédentes, dans lequel, avant la soumission de la demande d'informations et/ou la lecture de l'étiquette (5), le dispositif informatique mobile (6) se connecte au serveur (8) par Wi-Fi ou LTE.

6. Procédé selon l'une quelconque des revendications précédentes, dans lequel, avant la lecture de l'étiquette (5), le serveur (8) transmet une demande de lecture au dispositif informatique mobile (6) pour lire une étiquette (5).

7. Procédé selon l'une quelconque des revendications précédentes, dans lequel, après la transmission des informations d'état et/ou après que le dispositif informatique mobile (6) a reçu les informations d'état, le dispositif informatique mobile (6) transmet une instruction de commande au serveur (8).

8. Procédé selon la revendication 7, dans lequel l'instruction de commande comprend au moins l'un parmi l'ajout d'un article au composant (1), le retrait d'un article du composant (1), l'annulation d'une commande, l'envoi du composant (1) à une station de convoyage spécifiée, par exemple une station de dégagement, et/ou la récupération du composant (1).

9. Procédé selon l'une quelconque des revendications 7 ou 8, dans lequel le serveur (8) met à jour les informations d'état associées, de préférence après avoir reçu l'instruction de commande.

10. Procédé selon l'une quelconque des revendications 7 à 9, dans lequel, après avoir reçu l'instruction de commande, le serveur (8) envoie une confirmation au dispositif informatique mobile (6).

11. Programme informatique comprenant des instructions qui, lorsque le programme est exécuté sur un dispositif informatique mobile (6), de préférence un smartphone, amènent le dispositif informatique mobile (6) à réaliser les étapes a) et b) de la revendication 1, et de préférence les étapes de l'une quelconque des revendications 2 à 8.

12. Système de vérification de l'état d'un composant (1) d'un convoyeur (4), le système (100) comprenant un convoyeur (4) ayant au moins un composant (1), le composant (1) ayant une étiquette (5) comprenant un identifiant unique, le système (100) comprenant en outre un serveur (8) et un dispositif informatique mobile (6), de préférence un smartphone, connecté au serveur (8), le dispositif informatique mobile (6) étant configuré pour lire l'étiquette (5) et transmettre une demande d'informations et l'identifiant unique au serveur (8), le serveur (8) ayant une base de données (102) dans laquelle des informations d'état associées à l'identifiant unique sont stockées, le serveur (8) étant configuré pour transmettre, après avoir reçu l'identifiant unique, les informations d'état associées au dispositif informatique mobile (6), le système (100) étant configuré pour réaliser le procédé de l'une quelconque des revendications 1 à 9.

13. Système (100) selon la revendication 12, dans lequel l'étiquette (5) est ou comprend une étiquette RFID, le dispositif informatique mobile (6) étant de préférence configuré pour lire l'étiquette (5) par NFC, et/ou l'étiquette (5) comprenant un code à barres, un code QR et/ou un code alphanumérique, l'étiquette (5) étant de préférence lue optiquement.

14. Système (100) selon la revendication 12 ou 13, dans lequel le serveur (8) est un serveur sur site (8) et/ou le dispositif informatique mobile (6) est connecté au serveur (8) par Wi-Fi ou LTE.

15. Système (100) selon l'une quelconque des revendications 12 à 14, dans lequel le dispositif informatique mobile (6) est configuré pour envoyer une instruction de commande au serveur (8), le serveur (8) étant configuré pour commander le convoyeur (4) en réponse à l'instruction de commande.

16. Système (100) selon l'une quelconque des revendications 12 à 15, dans lequel le convoyeur (4) est ou comprend un convoyeur aérien, un convoyeur à rouleaux ou un convoyeur à bennes, et/ou dans lequel le composant (1) est ou comprend une poche (2), un support (3), une benne, une unité de transport, une station de convoyage et/ou un dispositif monté sur un point d'installation (101) du convoyeur (4).

17. Système (100) selon l'une quelconque des revendications 12 à 16, dans lequel le serveur (8) est configuré pour vérifier les composants (1) à la recherche d'anomalies et est en outre configuré pour envoyer une notification au dispositif informatique mobile (6), lorsqu'une anomalie est détectée.
